# EUROPÄISCHE PATENTANMELDUNG

(11) **EP 3 534 137 A1**
(43) Veröffentlichungstag der Anmeldung: **04.09.2019**
(21) Anmeldenummer: 19153362.9
(22) Anmeldetag: 23.01.2019
(51) Int. Cl.: G01N 1/12, G01N 1/18, G01F 23/24, G01N 1/10

(54) **VORRICHTUNG ZUM AUTOMATISIERTEN SAMMELN VON PROBEN VON HOCHWASSER-EREIGNISSEN UND REGENENTLASTUNGEN**

(30) Priorität: 28.02.2018 DE 102018104512
(71) Anmelder: Fürst, Joachim, 88400 Biberach (DE)
(72) Erfinder: Fürst, Joachim, 88400 Biberach (DE)
(74) Vertreter: Kiessling, Christian

(57) **Zusammenfassung**

Bei einer Vorrichtung zum Sammeln von Flüssigkeitsproben von Hochwasser-Ereignissen und Regenentlastungen, mit einem turbulent durchströmten Mantelbehälter (100) mit einem Flüssigkeitseingang (101) und einem Flüssigkeitsausgang (102) wird ein automatisiertes Sammeln einer Mehrzahl von Proben dadurch erreicht, dass im Inneren des Mantelbehälters (100) mindestens ein erster Probenbehälter (110) zum Sammeln eines Aliquots der Initialflüssigkeit eines zu untersuchenden Hochwasser-Ereignisses und ein zweiter Probenbehälter (120) zum Sammeln eines Aliquots der Final-Flüssigkeit des zu untersuchenden Hochwasser-Ereignisses vorgesehen ist.

## Beschreibung

Die Erfindung betrifft eine Vorrichtung zum Sammeln von Flüssigkeitsproben von Hochwasser-Ereignissen und Regenentlastungen, mit einem turbulent durchströmten Mantelbehälter mit einem Flüssigkeitseingang und einem Flüssigkeitsausgang.

Vorrichtungen der eingangs genannten Art werden im Stand der Technik verwendet, um Flüssigkeitsproben während eines Hochwasser-Ereignisses zu sammeln. Die bekannten Vorrichtungen weisen indes sämtlich den Nachteil auf, dass sie für eine automatisierte Aufnahme eines Aliquots der Initialflüssigkeit eines zu untersuchenden Hochwasser-Ereignisses und eine automatisierte Aufnahme eines Aliquots der Final-Flüssigkeit des zu untersuchenden Hochwasser-Ereignisses nicht geeignet sind.

Phosphorverbindungen (Phosphate) und Stickstoffverbindungen (Nitrite und Nitrate) in den in unterschiedlichen Stadien im Verlauf eines Hochwasser-Ereignisses gesammelten Aliquots können dabei wertvolle Aussagen über die Beschaffenheit und die Bewirtschaftung (u. a. Düngung) der umliegenden Böden der betroffenen Gewässer getroffen werden.

Aufgabe der Erfindung ist es deshalb, eine Vorrichtung zu schaffen, mit deren Hilfe ein automatisiertes Sammeln eines Aliquots der Initialflüssigkeit eines zu untersuchenden Hochwasser-Ereignisses und des Weiteren mindestens ein automatisiertes Sammeln eines Aliquots der Final-Flüssigkeit des zu untersuchenden Hochwasser-Ereignisses ermöglicht ist.

Für eine Vorrichtung der eingangs genannten Art wird diese Aufgabe erfindungsgemäß dadurch gelöst, dass im Inneren des Mantelbehälters mindestens ein erster Probenbehälter zum automatisierten Sammeln eines Aliquots der Initialflüssigkeit eines zu untersuchenden Hochwasser-Ereignisses und ein zweiter Probenbehälter zum automatisierten Sammeln eines Aliquots der Final-Flüssigkeit des zu untersuchenden Hochwasser-Ereignisses vorgesehen ist.

Bevorzugte Ausführungsformen der Erfindung sind Gegenstand der Unteransprüche, deren Elemente im Sinne einer weiteren Verbesserung des Lösungsansatzes der der Erfindung zugrunde gelegten Aufgabe wirken.

Bei der erfindungsgemäßen Vorrichtung wird mit Hilfe der Merkmalskombination, dass in dem Mantelbehälter mindestens ein erster Probenbehälter zum automatisierten Sammeln eines Aliquots der Initialflüssigkeit eines zu untersuchenden Hochwasser-Ereignisses und ein zweiter Probenbehälter zum automatisierten Sammeln eines Aliquots der Final-Flüssigkeit des zu untersuchenden Hochwasser-Ereignisses vorgesehen ist, erstmalig eine sichere und robuste automatisierte Probennahme für eine genaue Untersuchung vorherbestimmter Mess-Parameter während der wichtigsten Phasen eines Hochwasser-Ereignisses ermöglicht.

Zusätzlich ist es mit Hilfe der erfindungsgemäßen Vorrichtung ermöglicht, die Zeitevolution eines Belastungsausmaßes von Regenentlastungsereignissen für eine Vorflut in Qualität und Quantität zu erfassen.

Gemäß einer ersten bevorzugten Ausführungsform der erfindungsgemäßen Vorrichtung ist vorgesehen, dass der erste Probenbehälter mit einer im Bereich einer oberen Stirnfläche angeordneten Einlassöffnung für eine schnelle Befüllung mit vom Mantelbehälter aufgenommener Initial-Flüssigkeit des Hochwasser-Ereignisses sowie mit einer im Verhältnis zur lichten Fläche der Einlassöffnung sehr kleinen, ebenfalls im Bereich der oberen Stirnfläche angeordneten Auslassöffnung für ein mit dem Befüllungsvorgang verbundenes Entweichen von Luft aus dem Probenbehälter versehen ist, um für eine Probennahme eine singuläre nicht-turbulente Befüllung des ersten Probenbehälters zu bewirken.

Das Verhältnis der lichten Fläche der Eingangsöffnung zur lichten Fläche der Ausgangsöffnung liegt dabei vorzugsweise in einem Bereich zwischen 10/1 und 100/1.

Um einen effektiven Einlauf von Flüssigkeit in die Einlassöffnung des ersten Probenbehälters sicherzustellen kann der Einlassöffnung ein gegen die Fließrichtung der Flüssigkeit ausgerichteter Trichter vorgesetzt sein.

Gemäß einer weiteren bevorzugten Ausführungsform der erfindungsgemäßen Vorrichtung ist der zweite Probenbehälter mit einer im Bereich einer oberen Stirnfläche angeordneten großflächigen Öffnung für ein andauerndes Befüllen des zweiten Probenbehälters mit der den Mantelbehälter durchfließender Flüssigkeit sowie für ein mit dem Befüllungsvorgang verbundenes initiales Entweichen von Luft aus dem Probenbehälter und für ein andauerndes Ausleiten von Flüssigkeit aus dem Probenbehälter versehen, um für eine Probennahme eine turbulente Befüllung des zweiten Probenbehälters zu bewirken, die bis zu einem Absinken der Flüssigkeit unter die Öffnungsebene andauert. Die großflächige Öffnung des zweiten Probenbehälters kann dabei das Ausmaß der Hälfte bis zu der Gesamtheit der betreffenden oberen Stirnfläche des zweiten Probenbehälters ausmachen.

Im Bereich der großflächigen Öffnung des zweiten Probenbehälters kann ein in einem Einlauftrichter angeordnetes Gitter vorgesehen sein, um einen effektiven Zufluss von Flüssigkeit in das Innere des zweiten Probenbehälters unter Ausschluss von Verunreinigungen zu gewährleisten.

Gemäß einer wichtigen bevorzugten Ausführungsform der erfindungsgemäßen Vorrichtung ist im Inneren des Mantelbehälters ein dritter Probenbehälter zum Sammeln eines Aliquots einer über die Dauer oder Teildauer des Hochwasser-Ereignisses integrierten Ansammlung in konstanten Zeitabschnitten periodisch genommener Teilproben der den Mantelbehälter durchströmenden Flüssigkeit vorgesehen.

Alternativ kann gemäß einer weiteren wichtigen bevorzugten Ausführungsform der erfindungsgemäßen Vorrichtung im Inneren des Mantelbehälters ein dritter Probenbehälter zum Sammeln eines Aliquots eines über die Dauer des Hochwasser-Ereignisses integrierten, konstant erfolgenden, gesteuert reduzierten Zuflusses von Flüssigkeit in den dritten Probenbehälter angeordnet sein.

Gemäß letzterer Ausführung ist der dritte Probenbehälter vorzugsweise mit einer als mit einer Pipettenspitze versehenes Eingangsrohr ausgebildeten Eingangsöffnung zur Aufnahme von in dem Mantelbehälter zirkulierender Flüssigkeit sowie einer kleinen, im Bereich einer oberen Stirnfläche angeordneten Auslassöffnung für ein mit dem Befüllungsvorgang verbundenes Entweichen von Luft aus dem dritten Probenbehälter versehen, um für eine Probennahme eine stetige, nicht-turbulente Befüllung des dritten Probenbehälters zu bewirken. Die Eingangsöffnung kann dabei vorzugsweise im Bereich einer Seitenfläche des dritten Probenbehälters angeordnet sein.

Gemäß einer anderen wichtigen bevorzugten Ausführungsform der erfindungsgemäßen Vorrichtung ist in der Nachbarschaft des Mantelbehälters ein mit einer Zeitgebereinrichtung gekoppeltes Thermometer vorgesehen, um eine mit dem initialen Einlaufen von Flüssigkeit eines Hochwasser-Ereignisses in den Mantelbehälter verbundene Temperaturänderung am Thermometer durch Flüssigkeitsbenetzung des Thermometers sowie eine mit einem Rückgang des Hochwasser-Ereignisses im Zusammenhang stehende Temperaturänderung am Thermometer durch Trockenlegung des Thermometers zu sensieren und zu registrieren.

Zusätzlich ist dabei vorzugsweise eine Einrichtung vorgesehen, um eine Zeitdifferenz zwischen dem durch Temperaturänderung gemessenen Zeitpunkt des initialen Eintreffens Hochwasser-Flüssigkeit in den Mantelbehälter und der finalen äußeren Trockenlegung des Mantelbehälters zu errechnen.

Um eine Zirkulation der Flüssigkeit innerhalb des Mantelbehälters zu erzeugen, kann gemäß einer weiteren bevorzugten Ausführungsform der erfindungsgemäßen Vorrichtung unterhalb eines Einlauftrichters des Mantelbehälters ein Fallrohr vorgegebener Länge für ein richtungsorientiertes Einleiten von Flüssigkeit in den Mantelbehälter vorgesehen sein, und des Weiteren innerhalb des Mantelbehälters ein Steigrohr vorgegebener Länge für ein Ausleiten von Flüssigkeit aus dem Mantelbehälter vorgesehen sein, wobei ein unteres Ende des Steigrohres in der Nachbarschaft einer Basisfläche des Mantelbehälters angeordnet ist und die jeweilige Länge und Orientierung von Fallrohr und Steigrohr so gewählt sind, dass eine Zirkulation in gewünschtem Ausmaß stattfindet.

Das Fallrohr ist vorzugsweise im Bereich einer ersten Seitenwand des Mantelbehälters angeordnet und das Steigrohr ist dabei im Bereich einer der ersten Seitenwand gegenüberstehenden Seitenwand angebracht. Ein unteres Ende des Fallrohres kommt vorzugsweise im Bereich der Öffnung des zweiten Probenbehälters zu liegen, um eine turbulente Zirkulation innerhalb des zweiten Probenbehälters sicherzustellen.

Gemäß einer weiteren bevorzugten Ausführungsform der erfindungsgemäßen Vorrichtung ist der Mantelbehälter an einer im Grund eines fließenden oder stehenden Gewässers verankerbare Trägereinrichtung befestigt.

Die Trägereinrichtung kann dabei beispielsweise als metallisches Gitter ausgebildet sein, das im Bereich seines einen Endes mit mindestens einem Dorn zum Verankern des Gitters im Grund eines Gewässers und im Bereich seines anderen Endes mit mindestens einem Befestigungskarabiner zum Befestigen des Gitters an einer Ankereinrichtung sowie mit einer Auflagefläche zum Anbringen von Beschwerungselementen versehen ist.

Gemäß einer weiteren bevorzugten Ausführungsform der erfindungsgemäßen Vorrichtung ist in der Nachbarschaft des Mantelbehälters ein Wasserstand-Anzeiger vorgesehen, der bei Erreichen eines vorgegebenen Wasserstandpegels ein vorgegebenes Alarmsignal auslöst. Des Weiteren kann in der Nachbarschaft des Mantelbehälters insbesondere auch ein Wasserstand-Anzeiger vorgesehen sein, der bei Erreichen eines vorgegebenen Niedrig-Wasserstandpegels im Nachgang eines vorausgegangenen Hoch-Wasserstandpegels ein vorgegebenes Alarmsignal auslöst.

Zusätzlich ist vorzugsweise eine Sendeeinrichtung vorgesehen, um den Zustand eines Alarms an einen oder mehr vorgegebene Empfänger zu senden, wobei eine Kommunikation zwischen einer Sende- und einer Empfangseinrichtung vorzugsweise über eine oder mehr Telekommunikationsverbindungen erfolgt.

Die erfindungsgemäße Vorrichtung wird im Folgenden anhand einer bevorzugten Ausführungsform erläutert, die in den Figuren der Zeichnungen dargestellt ist. Darin zeigen:
- Fig.1: der auf einer Trägereinrichtung befestigte Mantelbehälter der erfindungsgemäßen Vorrichtung in einer Seitenansicht;
- Fig.2: der in Figur 1 dargestellte Mantelbehälter in einer Querschnittsansicht;
- Fig.3: die im Inneren des in Figur 1 dargestellten Mantelbehälters angeordneten ersten, zweiten und dritten Probenbehälter in einer Querschnittsansicht.

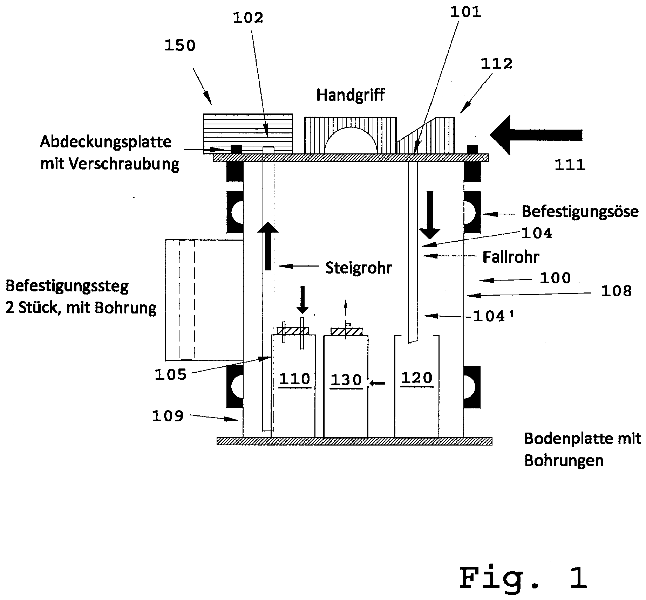

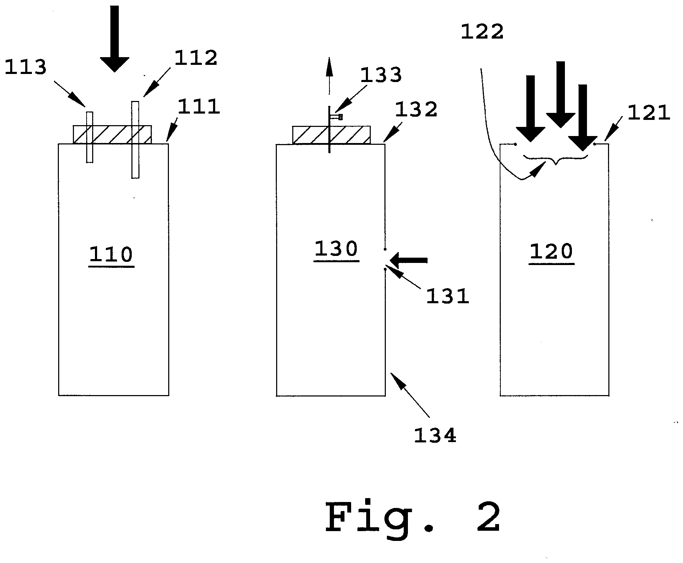

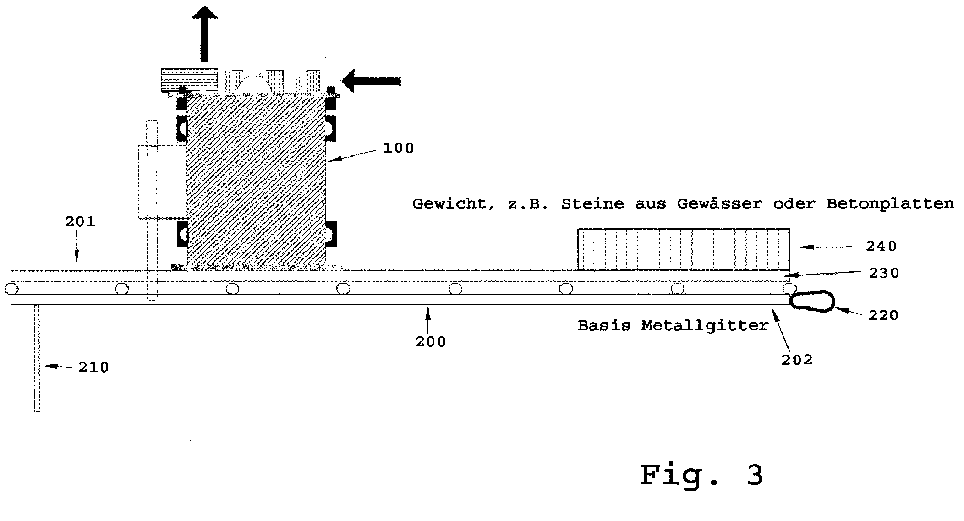

Die in den Figuren 1 bis 3 dargestellte erfindungsgemäße Vorrichtung ist für ein Sammeln von Flüssigkeitsproben von Hochwasser-Ereignissen und Regenentlastungen ausgelegt und enthält einen turbulent durchströmten Mantelbehälter 100 mit einem Flüssigkeitseingang 101 und einem Flüssigkeitsausgang 102, wobei im Inneren des Mantelbehälters 100 ein erster Probenbehälter 110 zum automatisierten Sammeln eines Aliquots der Initialflüssigkeit eines zu untersuchenden Hochwasser-Ereignisses und ein zweiter Probenbehälter 120 zum automatisierten Sammeln eines Aliquots der Final-Flüssigkeit des zu untersuchenden Hochwasser-Ereignisses angeordnet sind.

Des Weiteren ist im Inneren des Mantelbehälters 100 ein dritter Probenbehälter 130 angeordnet, der zum Sammeln eines Aliquots eines über die Dauer oder Teildauer des Hochwasser-Ereignisses integrierten, konstant erfolgenden, gesteuert reduzierten Zuflusses von Flüssigkeit ausgelegt ist.

Der erste Probenbehälter 110 ist mit einer im Bereich einer oberen Stirnfläche 111 angeordneten Einlassöffnung 112 für eine schnelle Befüllung mit vom Mantelbehälter 100 aufgenommener Initial-Flüssigkeit des Hochwasser-Ereignisses sowie mit einer im Verhältnis zur lichten Fläche der Einlassöffnung 112 sehr kleinen, ebenfalls im Bereich der oberen Stirnfläche 111 angeordneten Auslassöffnung 113 für ein mit dem Befüllungsvorgang verbundenes Entweichen von Luft aus dem Probenbehälter versehen, um für eine Probennahme eine singuläre nicht-turbulente Befüllung des ersten Probenbehälters 110 zu bewirken. Der Einlassöffnung 112 ist ein gegen die Fließrichtung der Flüssigkeit ausgerichteter Trichter 103 vorgesetzt.

Das Verhältnis der lichten Fläche der Eingangsöffnung 112 zur lichten Fläche der Ausgangsöffnung 113 ist dabei auf 20/1 bemessen.

Der zweite Probenbehälter 120 ist mit einer im Bereich einer oberen Stirnfläche 121 angeordneten großflächigen Öffnung 122 für ein andauerndes Befüllen des zweiten Probenbehälters 120 mit einer den Mantelbehälter 100 durchfließender Flüssigkeit sowie für ein mit dem Befüllungsvorgang verbundenes initiales Entweichen von Luft aus dem Probenbehälter und für ein andauerndes Ausleiten von Flüssigkeit aus dem Probenbehälter versehen, um für eine Probennahme eine turbulente Befüllung des zweiten Probenbehälters 120 zu bewirken, die bis zu einem Absinken der Flüssigkeit unter die Öffnungsebene andauert. Im Bereich der Öffnung 122 des zweiten Probenbehälters 120 ist dabei ein Gitter angeordnet.

Der dritte Probenbehälter 130 ist mit einer als mit einer Pipettenspitze versehenes Eingangsrohr ausgebildeten Eingangsöffnung 131 zur Aufnahme von in dem Mantelbehälter 100 zirkulierender Flüssigkeit sowie einer kleinen, im Bereich einer oberen Stirnfläche 132 angeordneten Auslassöffnung 133 für ein mit dem Befüllungsvorgang verbundenes Entweichen von Luft aus dem dritten Probenbehälter 130 versehen, um für eine Probennahme eine stetige, nicht-turbulente Befüllung des dritten Probenbehälters 130 zu bewirken. Die Eingangsöffnung 131 ist dabei im Bereich einer Seitenfläche 134 des dritten Probenbehälters 130 angeordnet.

In der Nachbarschaft des Mantelbehälters 100 ist ein mit einer Zeitgebereinrichtung gekoppeltes Thermometer 150 vorgesehen, um eine mit dem initialen Einlaufen von Flüssigkeit eines Hochwasser-Ereignisses in den Mantelbehälter 100 verbundene Temperaturänderung am Thermometer 150 durch Flüssigkeits-benetzung des Thermometers 150 sowie eine mit einem Rückgang des Hochwasser-Ereignisses im Zusammenhang stehende Temperaturänderung am Thermometer 150 durch Trockenlegung des Thermometers 150 zu sensieren und zu registrieren.

Des Weiteren ist eine nicht dargestellte Einrichtung vorgesehen, um die Zeitdifferenz zwischen dem durch Temperaturänderung gemessenen Zeitpunkt des initialen Eintreffens der Hochwasser-Flüssigkeit in den Mantelbehälter 100 und der finalen äußeren Trockenlegung des Mantelbehälters 100 zu bilden.

Unterhalb eines Einlauftrichters 103 des Mantelbehälters 100 ist ein Fallrohr 104 vorgegebener Länge für ein richtungsorientiertes Einleiten von Flüssigkeit in den Mantelbehälter 100 angeordnet, und des Weiteren ist innerhalb des Mantelbehälters 100 ein Steigrohr 105 vorgegebener Länge für ein Ausleiten von Flüssigkeit aus dem Mantelbehälter 100 vorgesehen, wobei ein unteres Ende des Steigrohres 105 in der Nachbarschaft einer Basisfläche 107 des Mantelbehälters 100 angeordnet ist. Die jeweilige Länge und Orientierung von Fallrohr 104 und Steigrohr 105 sind dabei gewählt, um eine Zirkulation der Flüssigkeit innerhalb des Mantelbehälters 100 zu erzeugen.

Ein unteres Ende des Fallrohres 104' kommt im Bereich der Öffnung 122 des zweiten Probenbehälters 120 zu liegen, und das Fallrohr 104 ist insgesamt im Bereich einer ersten Seitenwand 108 des Mantelbehälters 100 angeordnet, und das Steigrohr 105 ist im Bereich einer der ersten Seitenwand 108 gegenüberstehenden Seitenwand 109 angeordnet.

Der Mantelbehälter 100 ist an einer im Grund eines fließenden oder stehenden Gewässers verankerbare Trägereinrichtung 200 befestigt, wobei die Trägereinrichtung 200 als metallisches Gitter ausgebildet ist, das im Bereich seines einen Endes 201 mit zwei Dornen 210 zum Verankern des Gitters im Grund eines Gewässers und im Bereich seines anderen Endes 202 mit mindestens einem Befestigungskarabiner 220 zum Befestigen des Gitters an einer Ankereinrichtung sowie mit einer Auflagefläche 230 zum Anbringen von Beschwerungselementen 240 versehen ist.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

### Bezugszeichenliste

- 100: = Mantelbehälter
- 101: = Flüssigkeitseingang
- 102: = Flüssigkeitsausgang
- 103: = Einlauftrichter
- 104: = Fallrohr
- 104': = unteres Ende des Fallrohres
- 105: = Steigrohr
- 107: = untere Basisfläche des Mantelbehälters
- 108: = erste Seitenwand des Mantelbehälters
- 109: = zweite Seitenwand des Mantelbehälters
- 110: = erster Probenbehälter
- 111: = obere Stirnfläche des ersten Probenbehälters
- 112: = Einlassöffnung
- 113: = Auslassöffnung
- 120: = zweiter Probenbehälter
- 121: = obere Stirnfläche des zweiten Probenbehälters
- 122: = großflächige Öffnung
- 130: = dritter Probenbehälter
- 131: = Eingangsöffnung
- 132: = obere Stirnfläche des dritten Probenbehälters
- 133: = Auslassöffnung
- 134: = Seitenfläche des dritten Probenbehälters
- 150: = Thermometer
- 200: = Trägereinrichtung (metallisches Gitter)
- 201: = eines Endes der Trägereinrichtung
- 202: = anderes Ende der Trägereinrichtung
- 210: = Dorn
- 220: = Befestigungskarabiner
- 230: = Auflagefläche
- 240: = Beschwerungselemente

## Patentansprüche

1. Vorrichtung zum Sammeln von Flüssigkeitsproben von Hochwasser-Ereignissen und Regenentlastungen, mit einem turbulent durchströmten Mantelbehälter (100) mit einem Flüssigkeitseingang (101) und einem Flüssigkeitsausgang (102), **dadurch gekennzeichnet, dass** im Inneren des Mantelbehälters (100) mindestens ein erster Probenbehälter (110) zum automatisierten Sammeln eines Aliquots der Initialflüssigkeit eines zu untersuchenden Hochwasser-Ereignisses und ein zweiter Probenbehälter (120) zum automatisierten Sammeln eines Aliquots der Final-Flüssigkeit des zu untersuchenden Hochwasser-Ereignisses angeordnet sind.

2. Vorrichtung nach Anspruch 1, **dadurch gekennzeichnet, dass** der erste Probenbehälter (110) mit einer im Bereich einer oberen Stirnfläche (111) angeordneten Einlassöffnung (112) für eine schnelle Befüllung mit vom Mantelbehälter (100) aufgenommener Initial-Flüssigkeit des Hochwasser-Ereignisses sowie mit einer im Verhältnis zur lichten Fläche der Einlassöffnung (112) sehr kleinen, ebenfalls im Bereich der oberen Stirnfläche (111) angeordneten Auslassöffnung (113) für ein mit dem Befüllungsvorgang verbundenes Entweichen von Luft aus dem Probenbehälter (110) versehen ist, um für eine Probennahme eine singuläre nicht-turbulente Befüllung des ersten Probenbehälters (110) zu bewirken.

3. Vorrichtung nach Anspruch 2, **dadurch gekennzeichnet, dass** das Verhältnis der lichten Fläche der Eingangsöffnung (112) zur lichten Fläche der Ausgangsöffnung (113) in einem Bereich zwischen 10/1 und 100/1 liegt.

4. Vorrichtung nach einem der Ansprüche 2 oder 3, **dadurch gekennzeichnet, dass** einer Einlassöffnung (101) des Mantelbehälters (100) ein gegen die Fließrichtung der Flüssigkeit ausgerichteter Einlauftrichter (103) vorgesetzt ist.

5. Vorrichtung nach einem der vorhergehenden Ansprüche, **dadurch gekennzeichnet, dass** der zweite Probenbehälter (120) mit einer im Bereich einer oberen Stirnfläche (121) angeordneten großflächigen Öffnung (122) für ein andauerndes Befüllen des zweiten Probenbehälters (120) mit einer den Mantelbehälter (100) durchfließender Flüssigkeit sowie für ein mit dem Befüllungsvorgang verbundenes initiales Entweichen von Luft aus dem Probenbehälter (120) und für ein andauerndes Ausleiten von Flüssigkeit aus dem Probenbehälter (120) versehen ist, um für eine Probennahme eine turbulente Befüllung des zweiten Probenbehälters (120) zu bewirken, die bis zu einem Absinken der Flüssigkeit unter die Öffnungsebene andauert.

6. Vorrichtung nach Anspruch 5, **dadurch gekennzeichnet, dass** im Bereich der Öffnung (122) des zweiten Probenbehälters (120) ein Gitter vorgesehen ist.

7. Vorrichtung nach einem der Ansprüche 1 bis 6, **dadurch gekennzeichnet, dass** im Inneren des Mantelbehälters (100) ein dritter Probenbehälter (130) zum Sammeln eines Aliquots einer über die Dauer des Hochwasser-Ereignisses integrierten Ansammlung in konstanten Zeitabschnitten periodisch genommener Teilproben der den Mantelbehälter (100) durchströmenden Flüssigkeit vorgesehen ist.

8. Vorrichtung nach einem der Ansprüche 1 bis 6, **dadurch gekennzeichnet, dass** im Inneren des Mantelbehälters (100) ein dritter Probenbehälter (130) zum Sammeln eines Aliquots eines über die Dauer des Hochwasser-Ereignisses integrierten, konstant erfolgenden, gesteuert reduzierten Zuflusses von Flüssigkeit in den dritten Probenbehälter (130) angeordnet ist.

9. Vorrichtung nach Anspruch 8, **dadurch gekennzeichnet, dass** der dritte Probenbehälter (130) mit einer als mit einer Pipettenspitze versehenes Eingangsrohr ausgebildeten Eingangsöffnung (131) zur Aufnahme von in dem Mantelbehälter (100) zirkulierender Flüssigkeit sowie einer kleinen, im Bereich einer oberen Stirnfläche (132) angeordneten Auslassöffnung (133) für ein mit dem Befüllungsvorgang verbundenes Entweichen von Luft aus dem dritten Probenbehälter versehen ist, um für eine Probennahme eine stetige, nicht-turbulente Befüllung des dritten Probenbehälters (130) zu bewirken.

10. Vorrichtung nach Anspruch 9, **dadurch gekennzeichnet, dass** die Eingangsöffnung (131) im Bereich einer Seitenfläche (134) des dritten Probenbehälters (130) angeordnet ist.

11. Vorrichtung nach einem der vorhergehenden Ansprüche, **dadurch gekennzeichnet, dass** in der Nachbarschaft des Mantelbehälters (100) ein mit einer Zeitgebereinrichtung gekoppeltes Thermometer (150) vorgesehen ist, um eine mit dem initialen Einlaufen von Flüssigkeit eines Hochwasser-Ereignisses in den Mantelbehälter (100) verbundene Temperaturänderung am Thermometer (150) durch Flüssigkeitsbenetzung des Thermometers (150) sowie eine mit einem Rückgang des Hochwasser-Ereignisses im Zusammenhang stehende Temperaturänderung am Thermometer (150) durch Trockenlegung des Thermometers (150) zu sensieren und zu registrieren.

12. Vorrichtung nach Anspruch 11, **dadurch gekennzeichnet, dass** eine Einrichtung vorgesehen ist, um die Zeitdifferenz zwischen dem durch Temperaturänderung gemessenen Zeitpunkt des initialen Eintreffens der Hochwasser-Flüssigkeit in den Mantelbehälter (100) und der finalen äußeren Trockenlegung des Mantelbehälters (100) zu bilden.

13. Vorrichtung nach einem der vorhergehenden Ansprüche, **dadurch gekennzeichnet, dass** unterhalb eines Einlauftrichters (103) des Mantelbehälters (100) ein Fallrohr (104) vorgegebener Länge für ein richtungsorientiertes Einleiten von Flüssigkeit in den Mantelbehälter (100) vorgesehen ist, und des Weiteren innerhalb des Mantelbehälters (100) ein Steigrohr (105) vorgegebener Länge für ein Ausleiten von Flüssigkeit aus dem Mantelbehälter vorgesehen ist, wobei ein unteres Ende des Steigrohres (105) in der Nachbarschaft einer unteren Basisfläche (107) des Mantelbehälters (100) angeordnet ist, und wobei die jeweilige Länge und Orientierung von Fallrohr (104) und Steigrohr (105) gewählt sind, um eine Zirkulation der Flüssigkeit innerhalb des Mantelbehälters (100) zu erzeugen.

14. Vorrichtung nach Anspruch 13, **dadurch gekennzeichnet, dass** ein unteres Ende (104') des Fallrohres (104) im Bereich der Öffnung des zweiten Probenbehälters (120) zu liegen kommt.

15. Vorrichtung nach einem der Ansprüche 13 oder 14, **dadurch gekennzeichnet, dass** das Fallrohr (104) im Bereich einer ersten Seitenwand (108) des Mantelbehälters (100) angeordnet ist und das Steigrohr (105) im Bereich einer der ersten Seitenwand (108) gegenüberstehenden Seitenwand (109) angeordnet ist.

16. Vorrichtung nach einem der vorhergehenden Ansprüche, **dadurch gekennzeichnet, dass** der Mantelbehälter (100) an einer im Grund eines fließenden oder stehenden Gewässers verankerbare Trägereinrichtung (200) befestigt ist.

17. Vorrichtung nach Anspruch 16, **dadurch gekennzeichnet, dass** die Trägereinrichtung (200) als metallisches Gitter ausgebildet ist, das im Bereich seines einen Endes (201) mit mindestens einem Dorn (210) zum Verankern des Gitters im Grund eines Gewässers und im Bereich seines anderen Endes (202) mit mindestens einem Befestigungskarabiner (220) zum Befestigen des Gitters an einer Ankereinrichtung sowie mit einer Auflagefläche (230) zum Anbringen von Beschwerungselementen (240) versehen ist.

18. Vorrichtung nach einem der vorhergehenden Ansprüche, **dadurch gekennzeichnet, dass** in der Nachbarschaft des Mantelbehälters (100) ein Wasserstand-Anzeiger vorgesehen ist, der bei Erreichen eines vorgegebenen Wasserstandpegels ein vorgegebenes Alarmsignal auslöst.

19. Vorrichtung nach einem der vorhergehenden Ansprüche, **dadurch gekennzeichnet, dass** in der Nachbarschaft des Mantelbehälters (100) ein Wasserstand-Anzeiger vorgesehen ist, der bei Erreichen eines vorgegebenen Niedrig-Wasserstandpegels im Nachgang eines vorausgegangenen Hoch-Wasserstandpegels ein vorgegebenes Alarmsignal auslöst.

20. Vorrichtung nach einem der Ansprüche 18 oder 19, **dadurch gekennzeichnet, dass** eine Sendeeinrichtung vorgesehen ist, um den Zustand eines Alarms an einen oder mehr vorgegebene Empfänger zu senden.

21. Vorrichtung nach einem der Ansprüche 18 bis 20, **dadurch gekennzeichnet, dass** eine Kommunikation zwischen einer Sende- und einer Empfangseinrichtung über eine oder mehr Telekommunikationsverbindungen erfolgt.
